## Europäisches Patentamt
## European Patent Office
## Office européen des brevets

(19)

(11) Publication number: **0 017 431**
**B1**

(12)

# EUROPEAN PATENT SPECIFICATION

(45) Date of publication of patent specification: **23.03.83**

(51) Int. Cl.³: **B 60 Q 11/00**

(21) Application number: **80300957.0**

(22) Date of filing: **27.03.80**

(54) Direction indicating apparatus for vehicles.

(30) Priority: **05.04.79 JP 41361/79**

(43) Date of publication of application:
**15.10.80 Bulletin 80/21**

(45) Publication of the grant of the patent:
**23.03.83 Bulletin 83/12**

(84) Designated Contracting States:
**DE FR GB**

(56) References cited:
**US - A - 3 853 088**
**US - A - 4 105 996**
**US - A - 4 150 359**

(73) Proprietor: **NIPPONDENSO CO., LTD.**
**1, 1-chome Showa-cho**
**Kariya-shi Aichi-ken (JP)**

(72) Inventor: **Ishida, Hideo**
**6-30, Tenno-cho**
**Kariya-shi Aichi-ken (JP)**
Inventor: **Sakurai, Yasuhiko**
**3-37, Harazaki-cho**
**Kariya-shi Aichi-Ken (JP)**

(74) Representative: **Hartley, David et al,**
**c/o Withers & Rogers 4 Dyer's Buildings Holborn**
**London, EC1N 2JT (GB)**

Courier Press, Leamington Spa, England.

Direction indicating apparatus for vehicles

The present invention relates to a direction indicating apparatus for vehicles and, in particular, such apparatus capable of protecting against a short-circuit failure.

Most conventional apparatus of this kind which have been in actual practice employed are protected against excessively large current as caused by a short-circuit in direction indicating lamps and associated electric windings, by fusible links of the like incorporated in or connected to the apparatus.

It often occurs, however, that a vehicle operator replaces a burned out fusible link external to the apparatus, by a new one which has a larger rated value. This is most undesirable from the standpoint of safe running and management of the vehicle. If, on the other hand, an internal fusible link or the like fails the apparatus is disabled by the excessively large current. This is also undesirable for reasons of safety.

U.S. Patent Specification No. 3.858.088 discloses direction indicating apparatus with overcurrent and overvoltage protective features. A positive and a negative terminal connect the flasher into a D.C. circuit to be repeatedly interrupted. Control transistors drive output transistors into and out of conduction between the terminals at a frequency set by a multivibrator. A capacitor stores sufficient energy to maintain the bias to the flasher transistors as the flasher makes and breaks the circuit. A sampling resistor detects high currents and controls a transistor that, when it begins to conduct, reduces the base drive to the transistor output stage. Transient overcurrents, are permitted but substantial persistent overcurrents produce overvoltages across the partially conductive output stage, these overvoltages being sensed by a Zener diode which shuts down the apparatus but only after a delay during which flashing continues with no change in frequency.

According to this invention we propose direction indicating apparatus for vehicles comprising two groups of direction indicating lamps and a direction indicating switch operable to select one of the two lamp groups; relay means having a winding connected in series with a source of electric power, and a normally-open switch connected in series with the power source and the direction indicating switch, the normally-open switch being closed to energize the selected one of two lamp groups by the power source when the winding is energized; an oscillator operable when the direction indication switch is closed and including a first and a second transistor, the second transistor being connected in series with the winding and rendered conductive and nonconductive respectively in response to the conduction and nonconduction of the first transistor to energize the winding periodically; and a current detector operable to produce a voltage proportional to the electric current flowing from the electric power source to the selected one of the two lamp groups, characterized by a short-circuit detector operable to inhibit the second transistor of the oscillator when the said voltage exceeds a predetermined value, and including third, fourth and fifth transistors, the third transistor being connected in series with the second transistor such as to be rendered conductive when the said voltage exceeds a predetermined value, the fourth transistor being connected in series with the first transistor and rendered conductive when the first transistor is rendered conductive from nonconductive under the condition of conduction of the third transistor to thereby prevent the second transistor from being rendered conductive thereafter, and the fifth transistor being connected in parallel with the normally-open switch and rendered conductive by the conduction of the third transistor under the condition of nonconduction of the second transistor to thereby keep the third transistor conducting under the condition of nonconduction of said second transistor.

This invention enables the detection of an abnormal condition and serves to protect the apparatus, e.g. by preventing burnout, when such a condition occurs. When a short-circuit is detected the apparatus is disabled, that is, a flasher relay is held OFF so preventing the flow of the short-circuit current.

Embodiments of the invention will now be described by way of example with reference to the accompanying drawings of which:

FIG. 1 is an electrical circuit diagram of direction indicating apparatus according to the invention.

FIG. 2 is a waveform diagram illustrating voltages (a) to (e) developed at different points of the circuit of FIG. 1. and

FIGS. 3 and 4 are electrical circuit diagrams illustrating the other embodiments of the direction indicating apparatus according to the invention.

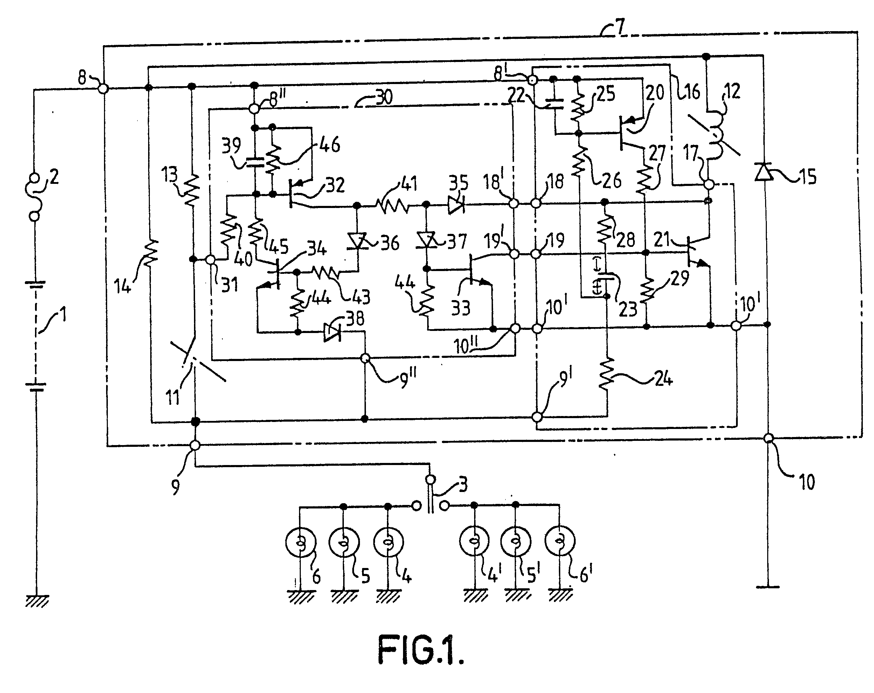

Referring first of all to FIG. 1, a source of electrical power, one end of which is grounded, has connected in series therewith a fusible link, leading to a power terminal 8. A direction indicating switch connected to a load terminal 9, controls operation of direction indicating lamps 4, 4', 5 and 5' and direction indicating lamps 6 and 6' mounted on the instrument panel of the vehicle, the lamps 4, 4', 5, 5', 6 and 6' being connected between the switch 3 and ground. The flashing control circuit includes a flasher circuit and a short-circuit current prevention circuit described in more detail below. 10 is a ground terminal.

The winding 12 of an electromagnetic relay used as flasher switch means actuates a normally open (OFF) switch 11 and is connected to a resistor 13 having a small resistance of say 0.05 ohm used as current detecting means and to a resistor 14 and a diode 15 used for circuit protection. An oscillator circuit 16 including a first transistor 20, a second transistor 21 functioning as a flasher transistor and a charge-and-discharge capacitor 23, has terminals 8′ 9′ and 10′ which are respectively connected to the power terminal 8, the load terminal 9 and ground. Terminals 18 and 19 of the oscillator circuit 16 are connected to a short-circuit detector 30 which includes a third transistor 32 functioning as a current detecting transistor, a fourth transistor 33 functioning as a flasher stop transistor, a fifth transistor 34 functioning as a self-hold transistor, diodes 35 to 38, a noise absorbing capacitor 39, and resistors 40 to 46.

In normal operation (i.e. in the absence of a short-circuit) the first and second transistors 20 and 21 in the oscillator circuit 16 conduct, so energizing the winding 12 of the relay when the direction indicating switch 3 is turned on to the left in FIG. 1. In response to this, the contact 11 closes (ON) so that current flows from the source of electric power 1 to ground through the fusible link 2, the power terminal 8, the resistor 13, the contact 11, the load terminal 9, the direction indicating switch 3, and the lamps 4, 5 and 6. The capacitor 23 in the oscillator circuit 16 repeatedly charges and discharges to render the first and second transistors 20 and 21 ON and OFF periodically so that the lamps 4, 5 and 6 are energized periodically.

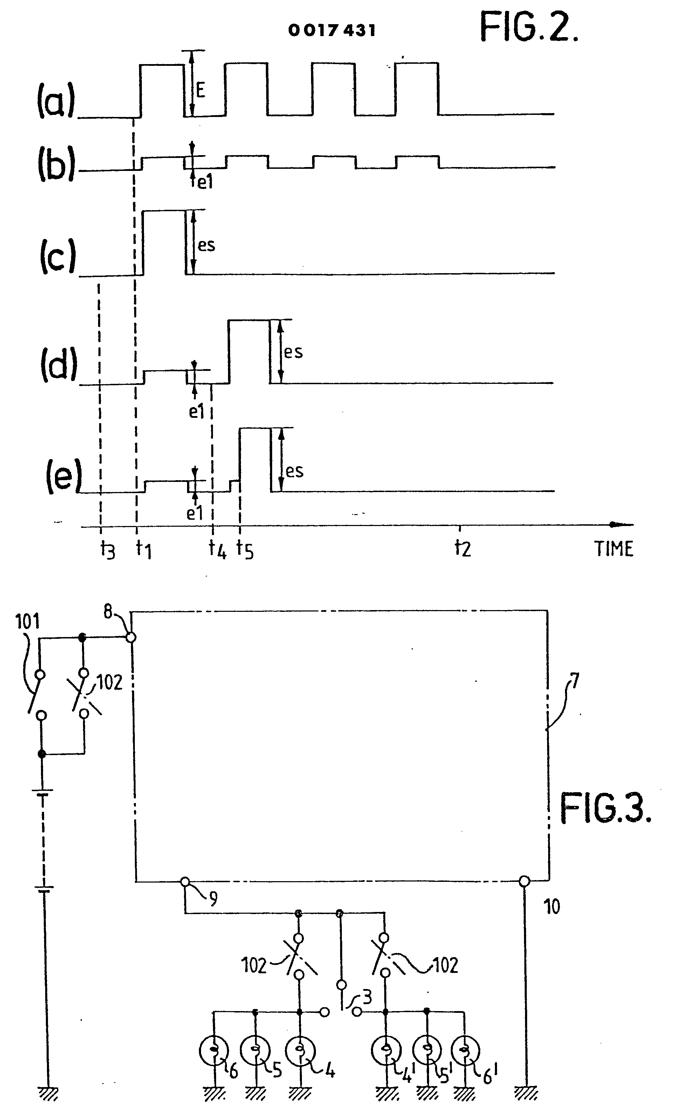

The potential difference developed across the current detecting resistor 13, and the potential difference developed across the lamps 4 and 5, are illustrated at (a) and (b) of FIG. 2, respectively. Although the potential difference across the resistor 13 is proportional to the current flowing therethrough, the base current of the third transistor 32 (in the absence of the short-circuit) is such as to maintain the third transistor 32. Similarly fourth and fifth transistors 33 and 34 are held OFF. In this state the voltage at terminals 18 and 18′ between the short-circuit detector circuit 30 and the oscillator circuit 16 is equal to that developed between the collector of the second transistor 21 and ground, while the voltage at terminals 19 and 19′ is equal to that developed between the base of the transistor 21 and ground.

Assuming that a short-circuit occurs among the load terminal 9, the direction indicating switch 3, the direction indicating lamps 4, 5 and 6 and ground, the first and second transistors 20 and 21 in the oscillator circuit are switched On to close the contact 11. The potential difference ES across the resistor 13 is increased as illustrated in (c) of FIG. 2 because of the short-circuit and the base current of the third transistor 32 is sufficient to switch ON the transistor. With the second transistor 21 ON, the potential at the terminals 18 and 18′ is substantially equal to the ground potential, and the base current of the fourth and fifth transistors 33 and 34 is insufficient to switch these transistors ON. When the first and second transistors 20 and 21 are switched OFF following charging of the capacitor 23, the potential at the terminals 18 and 18′ is increased.

As a result, the base current of the fourth and fifth transistors 33 and 34 supplied from the third transistor 32 increases sufficiently to switch these transistors ON at which point the contact 11 opens. The fifth transistor 34 is switched ON so that current flows through the current detecting resistor 13, the terminal 31 and the resistors 40 and 45, since the short-circuit is present between the load terminal 9 and ground. The current thus flows from the source of electric power 1 through the fusible link 2, the terminal 8, the resistors 40 and 45, the transistor 34 and the diode 38. Since the base current of the third transistor 32 flows through the transistor 34, the transistor 32 is held ON.

In this state the base current of the fourth transistor 33 flows from the source of electric power 1 through the fusible link 2, the terminals 8 and 8″, the transistor 32, the resistor 41 and the diode 37. Therefore, current flows through the collector-emitter path of the transistor 33. When the capacitor 23 is discharged, the transistor 20 is again switched ON and current flows to the fourth transistor 33 connected to the terminals 19 and 19′. Since the potential at the terminals 19 and 19′ is decreased almost to ground potential, the base current to the second transistor 21 is such as to hold OFF this transistor, thus keeping the contact 11 OFF. When a short-circuit occurs, the short-circuit detector circuit 30 operates such that the contact 11 closes once and thereafter keeps opening.

When the direction indicating switch 3 is opened, the fifth transistor 34 is switched OFF, there being no base current supply. The third trasistor 32 is supplied with little base current and is held OFF. The fourth transistor 33 is also supplied with little base current and thus remains reset.

Provided that the direction indicating switch 3 is closed to the left again (in the presence of the short-circuit) the above described operation is repeated. On the other hand if the switch 3 is closed to the right, the short-circuit detector circuit 30 does not operate and the lamps 4′, 5′ and 6′ periodically flash because no short-circuit exists. Since the relay contact 11 is held OFF in response to a short-circuit current in such a manner as described above, accidents caused by the short-circuit current at effectively prevented. The existence of a short-circuit current is recognized simply from the fact that the direction indicating lamps in which there is no short-circuit, periodically flash as desired.

In the short-circuit detector circuit 30, all the transistors 32, 33 and 34 are held OFF when the direction indicating switch 3 is open. Therefore, current does not flow from the terminal 8″ to the terminals 10″ through the transistor 32, and from the terminal 8′ to the terminal 10′. That is, no current flows from the source of electric power 1 to ground through the flasher control circuit 7. It is therefore advantageous that undesirable discharging of the source of electric power is prevented when the vehicle is not in use.

The oscillator circuit 16 functions as follows: With the voltage of the source of electric power applied to the terminals 8 and 8′, current flows through the resistors 25, 26 and 24, and the transistor 20 is switched ON. The transistor 21 is also switched ON with the base current flowing through the transistor 20 and the resistor 27. The relay winding 12 is energized to close the contact 11. As a result a voltage is applied to the terminals 9 and 9′ so that the capacitor 23 is charged (with the polarity indicated) by the current flowing through the resistors 24 and 28 and the transistor 21. The capacitor 23 is charged at the same time by the current flowing through the resistors 25, 26 and 28 and the transistors 21.

The transistor 20 is held ON, with the charging current for the capacitor 23 flowing to the resistor 25 even after the closure of the relay contact 11. When the capacitor 23 is charged to a predetermined level, the current flowing through the resistor 25 decreases to decrease the base current of the transistor 20 which is then switched OFF. The transistor 21 is also switched OFF. As a result, charging of the capacitor 23 ceases and the relay winding 12 is deenergized to open the contact 11. The charge stored on the capacitor 23 is discharged through the resistors 26 and 25, the winding 12 and the resistor 28, and through the resistor 24, terminals 9′ and 9, the switch 3, the direction indicating lamps (e.g. lamps 4 and 5), the source of electric power 1, the fusible link 2, the terminal 8, the winding 12 and the resistor 28.

As the discharging proceeds, the discharging current of the capacitor 23 flowing through the resistor 25 gradually decreases. As a result, the current finally begins to flow from the source of electric power 1 through the fusible link 2, the terminals 8 and 8′, the resistors 25, 26 and 24, the terminals 9′ and 9, the switch 3 and the direction indicating lamps 4 and 5 so that the transistor 20 is switched ON again. Thus the transistors 20 and 21 are repeatedly switched ON and OFF. When the base-emitter path of the transistor 21 is switched OFF. As a result, the contact 11 cannot close and the periodic flashing is stopped. In FIG. 1, it should be noted that numeral 17 designates a terminal 24, 26, 27, 28 and 29 resistors, 22 a capacitor, and 8″, 9″ and 10″ terminals.

Waveforms of the voltages developed in the circuit illustrated in FIG. 1 are illustrated in FIG. 2. A waveform diagram (a) illustrates the voltage developed across the direction indicating lamps 4, 5 and 6 in the absence of the short-circuit. E indicates the voltage of the source of electrical power. $t_1$ and $t_2$ indicate the time the direction indicating switch 3 is closed and opened, respectively. The waveform diagram (b) illustrates the difference in potential developed across the current detecting resistor 13, wherein $e_1$ indicates the potential difference in the absence of the short-circuit. Waveform charts (c) to (e) illustrate the difference in potential developed across the current detecting resistor 13, wherein $t_3$ to $t_5$ indicate the time the short-circuit occurs.

It should be noted in FIG. 1, that the collectors of the transistors 21 and 32 and the bases of the transistors 33 and 34 are interconnected by the resistors 41 and 43 and the diodes 36, 37 and 35. Therefore, even when an excessively large current such as the surge following energization of the lamp flows through the current detecting resistor 13, the transistors 33 and 34 whose base potentials are held low in the ON condition of the transistor 21 are not switched ON. Therefore, 11 never opens erroneously in response to the surge current.

As illustrated in (e) of FIG. 2, the contact 11 does not open immediately after the onset of the short-circuit current in the middle of the closure of the relay contact 11, (that is, the transistor 21 is held ON). Instead the transistors 33 and 34 are switched ON to prevent the transistor 21 from being again switched ON, provided the transistor 32 is held ON when the transistor 21 is switched OFF. (The contact 11 is not open but is just prior to opening because of the response delay.) This prevent erroneous operation caused by the surge current which flows through the lamp filaments insufficiently heated at the beginning of the lamp energization.

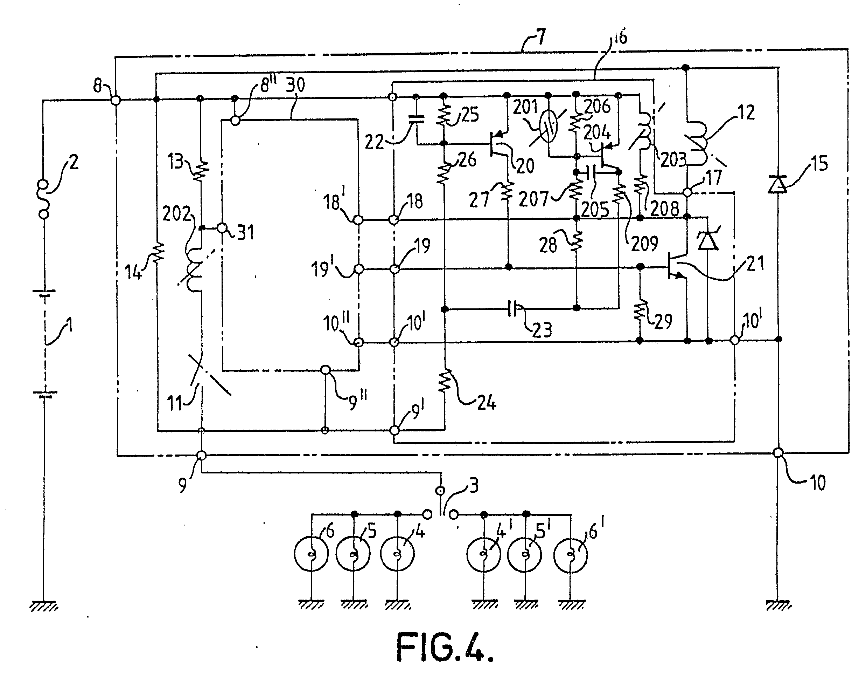

FIG. 3 illustrates a second embodiment of the apparatus according to this invention, in which the flashed control circuit is the same as that of the first embodiment. Therefore, reference is made to FIG. 1 when necessary in the following description. A battery switch 101 is connected between terminal of the battery 1 and the power terminal 8, in parallel with one circuit of a malfunction (hazard warning switch) 102 which is a triple-circuit ganged switch. The other two circuits of the switch 102 are connected respectively between the load terminal 9 and the lamps 4, 5 and 6 and between the load terminal 9 and the lamps 4′, 5′ and 6′.

This embodiment, operates in the same manner as in the first embodiment when a short-circuit occurs upon closures of the battery switch 101 and the direction indicating switch 3. That is, in response to the defection of a short-circuit the contact 11 is held open. Provided that the switch 3 is returned to its open position, the circuit is reset. It should be noted that, when the battery switch 101 opens before the switch 3 opens, the third transistor 32 is switched OFF with no voltage supply from the source of electric power 1. As a result, the fourth and fifth transistors 33 and 34 are sequentially switched OFF so that the circuit is reset. Assuming that the hazard warning switch 102 is closed by a vehicle operator to inform of the existence of a short-circuit, the source of electrical power 1 is connected to the power terminal 8 when the battery switch 101 opens and the direction indicating lamps 4, 4', 5, 5', 6 and 6' are energized through the switch 102.

In this state, the current which is twice as large as during normal operation, flows through the current detecting resistor 13. The circuit is designed such that the third transistor 32 is not supplied with the sufficient current by the potential difference across the resistor 13 relative to such a magnitude of the current. The short-circuit detector circuit 30 does not operate and the flashing of the lamps is repeated. When a short-circuit occurs, the short-circuit detector circuit 30 operates, that is, the transistor 32 is switched ON, in response to the short-circuit current which is larger than the malfunction indicating load current. As to resetting the short-circuit detector circuit 30, it is not possible to distinguish (because of the three-circuit ganged action of the switch 102 which one of the switches opens first. Therefore, there are two resetting modes (resetting orders) depending which of the direction indicating switch 3 and the battery switch 101 opens first. Thus this second embodiment is used not only to indicate the turn direction but also to indicate the malfunction by periodically energizing all the lamps.

FIG. 4 illustrates a third embodiment in which a lamp failure detector circuit is incorporated. A current winding 202 and a voltage winding 203 are provided differentially and associated with a reed switch 201, thus forming a relay. This also includes a transistor 204, a capacitor 205 and resistors 206 to 209.

In operation, when the direction indicating switch 3 is closed to the left in the absence of the lamp failure, the reed switch 201 is switched ON to switch OFF the transistor 204 during the lamp energization. This is because the current winding 202 and a voltage winding 203 are in a differential relation. When one lamp fails, on the contrary, the reed switch 201 is held OFF to switch ON the transistor 204. The potential on the capacitor 23 is increased by the resistors 209 and 28 so that the capacitor 23 charges earlier than in the absence of a failure lamp. The capacitor 23 discharges earlier in the same manner. As a result, the flashing frequency of the lamps is increased to indicate the failure of one of the lamps. The potential difference across the current detecting resistor 13 is decreased in proportion to the load current of one lamp and the short-circuit detector circuit 30 does not operate. Provided that the short-circuit occurs after a lamp failure, the short-circuit detection is effected in response to the potential difference across the current detecting resistor 13 in the same manner as described above. Thus the short-circuit detection is enabled even in flasher apparatus employing a lamp failure detector circuit.

In the above described embodiments, the flasher switch means comprises the relay contact 11 and the relay winding 12, the current detecting means comprises the current detecting resistor 13, and the control means comprises the oscillator circuit 16 and the short-circuit detector circuit 30 including the self-holding transistor 34 and the flasher-preventing transistor 33.

**Claims**

1. Direction indicating apparatus for vehicles comprising two groups of direction indicating lamps and a direction indicating switch (3) operable to select one of the two lamp groups;

relay means having a winding (12) connected in series with a source of electric power, and a normally-open switch (11) connected in series with the power source (1) and the direction indicating switch (3), the normally-open switch being closed to energize the selected one of two lamp groups by the power source (1) when the winding (12) is energized:

an oscillator operable when the direction indicating switch is closed and including a first (20) and a second (21) transistor, the second (21) transistor being connected in series with the winding (12) and rendered conductive and nonconductive respectively in response to the conduction and nonconduction of the first (20) transistor to energize the winding (12) periodically; and

a current detector (13) operable to produce a voltage proportional to the current flowing from the power source (1) to the selected one of the two lamp groups, characterized by a short-circuit detector (30) operable to inhibit the second transistor (21) of the oscillator when the said voltage exceeds a predetermined value and including third (32), fourth (33) and fifth (34) transistors, the third transistor (32) being connected in series with the second transistor (21) such as to be rendered conductive when the said voltage exceeds a predetermined value, the fourth transistor (33) being connected in series with the first transistor (20) and rendered conductive when the first transistor (20) is rendered conductive from nonconductive under the condition of conduction of the third transistor (32) to thereby prevent the second transistor (21) from being rendered conductive thereafter, and the fifth transistor (34) being connected in parallel with the normally-open switch (11) and rendered conductive by the conduction of the third transistor (32) under the condition of nonconduction of the second transistor (21) to thereby keep the third transistor (32) conducting under the condition of nonconduction of said second transistor (21).

2. Apparatus according to claim 1 and comprising a hazard warning switch (102) which is triple-circuit ganged switch, one circuit being connected in parallel with a switch (101) connected to the electric power source (1) and the other two circuits being connected in parallel with the direction indicating switch (3) each to a different one of the two lamp groups.

3. Apparatus according to claim 1 or claim 2 and comprising a lamp failure detection circuit operable to increase the frequency of the oscillator circuit (16) in response to the failure of one or more lamps in a lamp group.

## Revendications

1. Dispositif indicateur de direction pour véhicules, comprenant deux groupes de lampes indicatrices de direction et un commutateur-indicateur de direction (3) pouvant fonctionner de manière à choisir l'un des deux groupes de lampes:

un moyen de relais ayant en enroulement (12) relié en série à une source d'énergie électrique et un interrupteur normalement ouvert (11) relié en série à la source d'énergie (1) et au commutateur-indicateur de direction (3), l'interrupteur normalement ouvert (11) étant fermé de manière à alimenter le groupe choisi des deux groupes de lampes avec la source d'énergie (1) lorsque l'enroulement (12) est excité;

un oscillateur pouvant fonctionner lorsque le commutateur-indicateur de direction est fermé et comprenant un premier (20) et un second (21) transistor, le second transistor (21) étant relié en série à l'enroulement (12) et rendu conducteur et non-conducteur, respectivement, en réponse à la conduction et à la non-conduction du premier transistor (20) de manière à exciter périodiquement l'enroulement (12);

et un détecteur de courant (13) pouvant fonctionner de manière à produire une tension proportionnelle au courant circulant entre la source d'énergie (1) et le groupe choisi des deux groupes de lampes; caractérisé par un détecteur de court-circuit (30) pouvant fonctionner de manière à inhiber le second transistor (21) de l'oscillateur lorsque ladite tension dépasse une valeur prédéterminée et comprenant des troisième (32), quatrième (33) et cinquième (34) transistors, le troisième transistor (32) étant relié en série au second transistor (21) de façon à être rendu conducteur lorsque ladite tension dépasse une valeur prédéterminée, le quatrième transistor (33) étant relié en série avec le premier transistor (20) et rendu conducteur lorsque ce premier transistor (20) est rendu conducteur à partir de l'état non-conducteur dans le cas où il y a conduction du troisième transistor (32) de manière à éviter que le second transistor (21) ne soit rendu ensuite conducteur, et le cinquième transistor (34) étant relié en parallèle à l'interrupteur normalement ouvert (11) et rendu conducteur par la conduction du troisième transistor (32) dans la condition de non-conduction du second transistor (21) de manière à maintenir ainsi le troisième transistor (32) à l'état conducteur s'il y a nonconduction du second transistor (21).

2. Dispositif selon le revendication 1, et comprenant un commutateur d'avertissement de danger (102) qui est un commutateur jumelé à circuit triple, un circuit étant relié en parallèle à un interrupteur (101) connecté à la source d'énergie électrique (1) et les deux autres circuits étant reliés en parallèle au commutateur-indicateur de direction (3), chacun à un groupe différent des deux groupes de lampes.

3. Dispositif selon la revendication 1 ou la revendication 2, comprenant un circuit de détection de défaillance de lampe qui peut fonctionner pour augmenter la fréquence du circuit d'oscillateur (16) en réponse à la défaillance d'une ou plusieurs lampes dans un groupe de lampes.

## Patentansprüche

1. Richtungsanzeigevorrichtung für Fahrzeuge mit zwei Gruppen von Richtungsanzeigelampen und einem Richtungsanzeigeschalter (3), der betätigbar ist, um eine der beiden Lampengruppen auszuwählen,

mit einer Relaiseinrichtung, die eine Wicklung (12), die in Reihe mit einer elektrischen Energiequelle geschaltet ist, une einem Schließerkontakt (11) aufweist, der in Reihe mit der Energiequelle (1) und dem Richtungsanzeigeschalter (3) geschaltet ist, wobei der Schließerkontakt (11) geschlossen wird, um die ausgewählte eine Lampengruppe über die Energiequelle (1) mit Energie zu versorgen, wenn die Wicklung (12) erregt ist,

mit einem Oszillator, der arbeiten kann, wenn der Richtungsanzeigeschalter geschlossen ist, und der einen ersten (20) und einen zweiten (21) Transistor aufweist, wobei der zweite Transistor (21) in Reihe mit der Wicklung (12) geschaltet ist und jeweils auf das Durchschalten und Sperren des ersten Transistors (20) ansprechend durchschaltet und sperrt, um die Wicklung (12) periodisch zu erregen, und

mit einem Stromdetektor (13), der so arbeiten kann, daß er eine Spannung erzeugt, die proportional zu dem Strom ist, der von der Energiequelle (1) zu der gewählten einen Lampengruppe fließt, gekennzeichnet durch einen Kurzschlußdetektor (30), der so arbeiten kann, daß er den zweiten Transistor (21) des Oszillators sperrt, wenn die Spannung einen vorbestimmten Wert überschreitet, und der einen dritten (32), einen vierten (33) und einen fünften (34) Transistor enthält, wobei der dritte Transistor (32) in Reihe mit dem zweiten Transistor (21) so geschaltet ist, daß er durchgeschaltet wird, wenn die Spannung einen vorbestimmten Wert überschreitet, der vierte Transistor (33) in Reihe mit dem ersten Transistor (20) geschaltet ist und durchgeschaltet wird, wenn der erste Transistor (20) vom gesperrten Zustand in den durchgeschalteten Zustand unter der Bedingung kommt, daß der dritte Transistor (32) leitet, um dadurch zu verhindern, daß der zweite Transistor (21) danach durchgeschaltet wird, und der fünfte Transistor (34) parallel zum Schließerkontakt (11) geschaltet ist, und durch das Leiten des dritten Transistors (32) unter der Bedingung, daß der zweite Transistor (21) sperrt, durchgeschaltet wird, um dadurch den dritten Transistor (32) unter der Bedingung, daß der zweite Transistor (21) sperrt, im leitenden Zustand zu halten.

2. Vorrichtung nach Anspruch 1, gekennzeichnet durch einen Gefahrwarnschalter (102), der ein Dreifachschalter ist, dessen einer Schaltkreis parallel zu einem Schalter (101) geschaltet ist, der mit der elektrischen Energiequelle (1) verbunden ist, und dessen zwei anderen Schaltkreise parallel zum Richtungsanzeigeschalter (3) mit jeweils einer anderen Lampengruppe verbunden ist.

3. Vorrichtung nach Anspruch 1 oder 2, gekennzeichnet durch eine Lampenausfalldetektorschaltung, die so arbeiten kann, daß sie die Frequenz der Oszillatorschaltung (16) auf den Ausfall einer oder mehrerer Lampen in einer Lampengruppe ansprechend erhöht.

FIG.1.

0017431

0017431

FIG.2.

FIG.3.

FIG.4.